# EUROPEAN PATENT APPLICATION

(11) **EP 4 711 176 A1**
(43) Date of publication of application: **18.03.2026**
(21) Application number: 25196145.4
(22) Date of filing: 15.08.2025
(51) Int. Cl.: B60K 35/23, B60K 35/231, B60K 35/50, B60K 35/90, G02F 1/1333, G09G 3/34, H05K 7/20

(54) **PRIORITISED THERMAL CONTROL FOR HEADS-UP DISPLAY**

(30) Priority: 30.08.2024 US 202418820488
(71) Applicant: Distance Technologies Oy, 00530 Helsinki (FI)
(72) Inventor: Strandborg, Mikko, 00530 Helsinki (FI); Carlsson, Thomas, 00530 Helsinki (FI); Savolainen, Petri, 00530 Helsinki (FI); Konttori, Urho, 00530 Helsinki (FI)
(74) Representative: Moosedog Oy

(57) **Abstract**

Disclosed is a system (100) implemented in a vehicle (102). The system comprises: a heads-up display (HUD) (104, 200); temperature sensors (106a-b, 206a-h) corresponding to regions (208a-b) of the HUD; a temperature controlling unit (108, 210); and processor(s) (110) configured to: determine, using the temperature sensors, temperatures of the regions; detect when the temperatures lie outside a predefined operating temperature range of the HUD; and when it is detected that the temperatures lie outside the predefined operating temperature range, determine a priority order, based on at least one of: the temperatures of the regions, an importance level that is pre-assigned to given virtual content (214a-b) that is to be presented via a given region of the HUD; and control the temperatures according to the priority order, by using the temperature controlling unit, to bring the temperatures within the predefined operating temperature range.

## Description

### TECHNICAL FIELD

The present disclosure relates to systems incorporating prioritised thermal control for heads-up displays in vehicles. Moreover, the present disclosure relates to methods incorporating prioritised thermal control for heads-up displays in vehicles.

### BACKGROUND

Glasses-free augmented-reality (AR) systems typically employ heads-up displays (HUDs) for presenting visual information to users without diverting their attention from their primary tasks, for example, such as driving vehicles.

However, conventional AR systems employing the HUDs have certain drawbacks. Firstly, when a temperature of a liquid-crystal display (LCD)-based HUD or a light-emitting diode (LED)-based HUD lies outside its working temperature range, there is a likelihood of the LCD-based HUD or the LED-based HUD being inoperational, i.e., not being able to present any visual content. As an example, for an HUD employed in a vehicle, a temperature inside the vehicle may increase beyond a working temperature range of the HUD in extremely hot environments, thereby overheating the HUD. Such an increase in the temperature is more prominent when the HUD is implemented on a dashboard or a windshield of the vehicle, where direct sunlight causes a rapid increase in the temperature inside the vehicle. Similarly, in extremely cold environments, a temperature inside the vehicle significantly drops below the working temperature range of the HUD. As a result, components of the HUD tend to freeze or becomes sluggish. In both the aforesaid scenarios, the HUD fails to function correctly until an interior of the vehicle cools down or warms up. Thus, the visual content is either not presented via the HUD, or is presented with a very high latency. This is highly undesirable, especially, when the visual content comprises critical visual information, for example, pertaining to instrumentation of the vehicle, to be displayed immediately when the vehicle is started. In addition to this, what is presented to a user present inside the vehicle is of a poor quality and affects an accuracy of the critical visual information being presented to the user.

Therefore, in light of the foregoing discussion, there exists a need to overcome the aforementioned drawbacks.

### SUMMARY

The present disclosure seeks to provide a system and a method which facilitate in controlling temperatures of regions of a heads-up display in a vehicle according to a priority order, for enabling accurate presentation of any virtual content via said regions, in a time-efficient and computationally-efficient manner. The aim of the present disclosure is achieved by a system and a method which incorporate a prioritised thermal control for a heads-up display in a vehicle, as defined in the appended independent claims to which reference is made to. Advantageous features are set out in the appended dependent claims.

Throughout the description and claims of this specification, the words *"comprise", "include", "have",* and *"contain"* and variations of these words, for example *"comprising"* and *"comprises",* mean *"including but not limited to",* and do not exclude other components, items, integers or steps not explicitly disclosed also to be present. Moreover, the singular encompasses the plural unless the context otherwise requires. In particular, where the indefinite article is used, the specification is to be understood as contemplating plurality as well as singularity, unless the context requires otherwise.

### BRIEF DESCRIPTION OF THE DRAWINGS

FIGs. 1A and 1B, illustrated are simplified example implementations of a system incorporating a prioritised thermal control for a heads-up display in a vehicle, in accordance with different embodiments of the present disclosure;
FIG. 2A illustrates an exemplary heads-up display of a vehicle being divided into a grid of a plurality of grid segments, FIG. 2B illustrates two exemplary regions of the heads-up display, while FIG. 2C illustrates an exemplary scenario of presenting given virtual content via a given region of the heads-up display, in accordance with an embodiment of the present disclosure; and
FIG. 3 illustrates steps of a method incorporating a prioritised thermal control for a heads-up display in a vehicle, in accordance with an embodiment of the present disclosure.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practising the present disclosure are also possible.

In a first aspect, an embodiment of the present disclosure provides a system implemented in a vehicle, the system comprising:
a heads-up display;
a plurality of temperature sensors corresponding to a plurality of regions of the heads-up display;
a temperature controlling unit; and
at least one processor configured to:
   determine, using the plurality of temperature sensors, temperatures of the plurality of regions of the heads-up display;
   detect when the temperatures of the plurality of regions lie outside a predefined operating temperature range of the heads-up display; and
   when it is detected that the temperatures of the plurality of regions lie outside the predefined operating temperature range,
      determine a priority order according to which the temperatures of the plurality of regions are to be controlled, based on at least one of: the temperatures of the plurality of regions, an importance level that is pre-assigned to given virtual content that is to be presented via a given region of the heads-up display; and
      control the temperatures of the plurality of regions according to the priority order, by using the temperature controlling unit to bring the temperatures of the plurality of regions within the predefined operating temperature range.

In a second aspect, an embodiment of the present disclosure provides a method implemented in a vehicle, the method comprising:
determining temperatures of a plurality of regions of a heads-up display using a plurality of temperature sensors, wherein the plurality of temperature sensors corresponds to the plurality of regions of the heads-up display;
detecting when the temperatures of the plurality of regions lie outside a predefined operating temperature range of the heads-up display; and
when it is detected that the temperatures of the plurality of regions lie outside the predefined operating temperature range,
   determining a priority order according to which the temperatures of the plurality of regions are to be controlled, based on at least one of: the temperatures of the plurality of regions, an importance level that is pre-assigned to given virtual content that is to be presented via a given region of the heads-up display; and
   controlling the temperatures of the plurality of regions according to the priority order, by using a temperature controlling unit to bring the temperatures of the plurality of regions within the predefined operating temperature range.

The present disclosure provides the aforementioned system and the aforementioned method which facilitate in controlling the temperatures of the plurality of regions of the heads-up display according to the priority order, for enabling accurate presentation of any virtual content via the plurality of regions, in a time-efficient and computationally-efficient manner. Herein, instead of controlling a temperature of an entirety of the heads-up display (as in case of the prior art), the temperatures of the plurality of regions of the heads-up display are controlled according to the priority order, a temperature of a region where important/critical virtual content (for example, pertaining to instrumentation of the vehicle or a synthetic rear view of the vehicle) is to be presented or a temperature of a region lying closer to the predefined operating temperature range is controlled (for example, by way of heating or cooling said region) at a higher priority, as compared to temperatures of other region(s) of the heads-up display. Beneficially, this enables in presenting to a user any virtual content via said region immediately or near-immediately, for example, upon vehicle start-up. This significantly improves an overall viewing experience of the user (for example, in terms of realism and immersiveness), as the virtual content is presented to the user with minimal to no latency. The system and the method are susceptible to be implemented in any type of environment irrespective of a temperature of the environment (for example, whether the environment is an extremely hot environment or an extremely cold environment). The system and the method are simple, robust, fast, reliable, support real-time prioritised thermal control for the heads-up display, and can be implemented with ease.

Throughout the present disclosure, the term *"heads-up display"* refers to a display that is capable of displaying an image to a user present in the vehicle. It will be appreciated that the heads-up display (HUD) is utilised to present visual information represented in the image to the user, without requiring the user to look considerably away from his/her usual viewpoint (for example, when looking towards a road on which the vehicle is being driven). Herein, the term *"visual information"* encompasses colour information represented in the image, and additionally, optionally other attributes (for example, such as depth information, illuminance information, transparency information, and the like) associated with the image. The vehicle could, for example, be a car, a truck, an aircraft, a speed boat, or the like. The car could be a convertible car or a hardtop car. The vehicle could also be a semi-open vehicle (for example, such as a boat). It will also be appreciated that the HUD could be a two-dimensional (2D) HUD that is capable of displaying images in a 2D manner i.e., without any depth perception, or be a three-dimensional (3D) HUD that is capable of displaying images in an autostereoscopic manner, for example, by way of producing a synthetic light field. Heads-up displays and their forms are well-known in the art.

In some implementations, the HUD comprises a light field display unit and an optical combiner, wherein the optical combiner is arranged on an optical path of the light field display unit and on an optical path of a real-world light field incoming via a windshield of the vehicle, and wherein the light field display unit is utilised for producing a synthetic light field augmenting the real-world light field. In such implementations, the windshield of the vehicle may be utilised as the optical combiner. The term *"optical combiner"* refers to a specialised equipment that is capable of reflecting a corresponding part of the synthetic light field towards a given eye of the user, whilst optically combining said corresponding part of the synthetic light field with the real-world light field. Optionally, the optical combiner is implemented by way of at least one of: a lens, a mirror, a semi-transparent mirror, a semi-transparent film, a semi-transparent flexible membrane, a prism, a beam splitter, an optical waveguide, a polarizer. Optical combiners are well-known in the art. It will be appreciated that the user may face the optical combiner in almost a straight manner, or may face the optical combiner in a diagonal manner (namely, obliquely or sideways). Optionally, a tilt angle of the optical combiner with respect to an image plane of the light field display unit lies in a range of 10 degrees and 75 degrees.

The term *"real-world light field"* refers to a light field emanating from a region of a surrounding environment in front of the vehicle, and incoming via the windshield of the vehicle. Further, the term *"synthetic light field"* refers to a light field that is produced (namely, generated) synthetically by the HUD (specifically, by the light field display unit of the HUD). It will be appreciated that in case of the real-world light field, light from, for example, a natural light source (such as the Sun) and/or an artificial light source (such as a lamp, a bulb, a tube-light, or similar), is reflected off real-world objects (or their portions) to be incident towards eyes of the user. In this way, visual information pertaining to said real-world objects is typically perceived by the eyes of the user. On the other hand, in case of the synthetic light field, light emanating from the HUD is incident towards the eyes of the user. In this way, visual information represented in the image can be perceived by the eyes of the user. Advantageously, production of the synthetic light field augmenting the real-world light field provides a result that is similar to displaying a combined view of a virtual image augmenting a real-world image to the user.

Further, the term *"light field display unit"* refers to a specialised equipment that is capable of producing the synthetic light field. In other words, the light field display unit is utilised to display the image to produce the synthetic light field at a given resolution. Optionally, the light field display unit is implemented in a form of any one of: a hogel-based light field display unit, a lenticular array-based light field display unit, a parallax-barrier-based light field display unit. In such a case, the heads-up display is a 3D heads-up display. Alternatively, optionally, in the heads-up display, the light field display unit can be implemented as a regular 2D display, without any multiscopic optical element (for example, such as a parallax barrier or a lenticular array). In such a case, the heads-up display is a 2D heads-up display. All the aforementioned forms of light field display units are well-known in the art.

In other implementations, the HUD comprises a transparent display, and optionally, a controllable parallax barrier. The term *"transparent display"* refers to a display that enables the user to view visual information represented in the image, while also being able to see-through the display to view a region of the surrounding environment in front of the vehicle. The transparent display could, for example, be implemented as an organic light-emitting diode (OLED)-based transparent display, a micro light-emitting diode (µLED)-based transparent display, or a thin film electroluminescence (TFEL) based display (for example, such as Lumineq^{®}). Transparent displays and their types are well-known in the art. Without the controllable parallax barrier, the heads-up display is implemented as a 2D heads-up display. Otherwise, with the controllable parallax barrier, the heads-up display can be implemented as a 2D heads-up display or a 3D heads-up display on a need basis. The controllable parallax barrier can be implemented as any one of: a switchable liquid crystal (LC) shutter array, a switchable LC barrier, a transparent/diffuse switchable film (for example, made of a polymer-dispersed liquid crystal (PDLC)). The aforementioned examples of the controllable parallax barrier are well-known in the art.

Notably, the at least one processor controls an overall operation of the system. The at least one processor is communicably coupled to at least the HUD, the plurality of temperature sensors, and the temperature controlling unit. In some implementations, when the HUD comprises the light field display unit and the optical combiner (as described earlier), the at least one processor is implemented as a processor of the light field display unit. In other implementations, the at least one processor is implemented as a processor of a computing device. Examples of the computing device include, but are not limited to, a laptop, a tablet, a phablet, and a smartphone. In yet other implementations, the at least one processor is implemented as a cloud server (namely, a remote server) that provides a cloud computing service.

Throughout the present disclosure, the term *"temperature sensor"* refers to a sensor that is capable of sensing a temperature of a given region of the HUD. Optionally, a given temperature sensor from amongst the plurality of temperature sensors is implemented as any one of: an infrared-based temperature sensor, a thermistor, a resistance temperature detector (RTD). All the aforesaid types of temperature sensors and their working principles are well-known in the art. It will be appreciated that the given temperature sensor is optionally arranged inside the vehicle for determining the temperature of the given region of the HUD. Optionally, the given temperature sensor is communicably coupled to the at least one processor. It will be appreciated that the given temperature sensor is utilised to repeatedly sense the temperature of the given region, in order to determine the temperature of the given region in real time or near-real time.

Throughout the present disclosure, the term *"region"* of the HUD refers to a portion of the HUD. The plurality of regions of the HUD do not necessarily have a same size. In other words, different regions of the HUD could have different sizes, depending on at least one of: a type of virtual content to be presented via the different regions, a size of the virtual content, a shape of the virtual content, a location of a given region in the HUD. It will be appreciated that a number of temperature sensors that correspond to the given region of the HUD may depend on a size of the given region of the HUD. Greater the size of the region of the HUD, greater is the number of temperature sensors that correspond to the given region. In an example, for sake of simplicity and clarity, the HUD may have four regions of different sizes, wherein each of a first region and a second region from amongst the four regions correspond to a single temperature sensor, a third region from amongst the four regions corresponds to two temperature sensors, and a fourth region from amongst the four regions corresponds to four temperature sensors. In another example, for sake of simplicity and clarity, the HUD may have four regions of same sizes, wherein each of the four regions corresponds to four temperature sensors. It will also be appreciated that it may not be necessary that each of the plurality of regions of the HUD is to be employed to present any virtual content. In other words, only some regions of the HUD may be employed to present any virtual content, while remaining regions of the HUD may not be employed to present any virtual content, and thus could be just empty spaces in the HUD. In such a case, the remaining regions of the HUD may not correspond to any temperature sensor. It will also be appreciated that different regions of the HUD could also have different shapes, depending on the at least one of: the type of virtual content, the size of the virtual content, the shape of the virtual content, a location of a given region in the HUD. Optionally, the heads-up display comprises a plurality of display panels, wherein each region of the heads-up display corresponds to a display panel of its own.

Throughout the present disclosure, the term *"temperature controlling unit"* refers to an equipment that is capable of controlling a temperature of the given region of the HUD. It will be appreciated that by the phrase *"controlling a temperature of the given region",* it is meant that the temperature controlling unit is employed to either heat the given region or to cool the given region, in order to bring the temperature of the given region within the predefined operating temperature range (as discussed later in detail). It will also be appreciated that the temperature controlling unit is employed to control the temperatures of the plurality of regions of the HUD in a segmented manner. The temperature controlling unit could, for example, be arranged on a dashboard of the vehicle or a windshield of the vehicle.

Optionally, the temperature controlling unit is implemented as a heat pump. In this regard, the heat pump could be controllable to produce a hot fluid or a cold fluid that is to be dynamically redirected (namely, transported) to one or more regions of the HUD (according to the priority order), in order to either heat up the one or more regions or to cool down the one or more regions accordingly. The technical benefit of implementing the heat pump in the aforesaid manner is that since the heat pump can only produce a certain amount of the hot fluid or the cold fluid at a given time instant, respective temperatures of prioritised regions of the HUD can be brought within the predefined operating temperature range in minimal time, by transporting an entirety or a majority of an output of the hot fluid or the cold fluid from the heat pump to only said prioritised regions, instead of dividing and transporting said output equally across the plurality of regions of the HUD. It will be appreciated that, in some implementations, an air-conditioning unit in the vehicle could also be repurposed to be implemented as the heat pump.

Optionally, when determining the temperatures of the plurality of regions of the HUD, the at least one processor is configured to process temperature sensor data collected by the plurality of temperature sensors, the temperature sensor data comprising readings of the temperatures of the plurality of regions of the HUD as sensed by the plurality of temperature sensors. Since the temperatures of the plurality of regions are determined repeatedly, and the predefined operating temperature range is known, the at least one processor could easily ascertain when the temperatures lie outside the predefined operating temperature range.

Throughout the present disclosure, the term *"predefined operating temperature range"* refers to a temperature range within which the HUD is operable, i.e., being able to present any virtual content. Optionally, when the HUD comprises a liquid-crystal display (LCD), the predefined operating temperature range lies between 0 degree Celsius to +50 degree Celsius. Optionally, when the heads-up display comprises the transparent display, the predefined operating temperature range lies between -20 degree Celsius to +70 degree Celsius.

It will be appreciated that when the temperature of a given region of the HUD lies outside the predefined operating temperature range, there is a likelihood of the given region of the HUD being inoperational, i.e., not being able to present any virtual content. In other words, the temperature of the given region is either too high (for example, when the HUD is employed in an extremely hot surrounding environment) or too low (for example, when the HUD is employed in an extremely cold surrounding environment), for it to present any virtual content. It is to be noted that such an inoperational behaviour may occur until the given region of the HUD is allowed to warm-up (i.e., generate some heat) or to cool down (i.e., dissipate some heat) after the HUD is switched on, such that the temperature of the given region reaches within the predefined operational temperature range. Thus, in this regard, the temperature controlling unit is employed to control the temperature of the given region of the HUD accordingly, i.e., to bring the temperature of the given region within the predefined operating temperature range. In a case where the temperature of the given region is below the predefined operating temperature range, the temperature controlling unit is utilised to increase the temperature of the given region by heating up the given region. In another case where the temperature of the given region is above the predefined operating temperature range, the temperature controlling unit is utilised to decrease the temperature of the given region by cooling down the given region.

However, when the temperatures of the plurality of regions lie outside the predefined operating temperature range, the at least one processor is configured to determine the priority order, and control the temperatures of the plurality of regions according to the priority order. Throughout the present disclosure, the term *"priority order"* refers to a sequence in which the temperatures of the plurality of regions are to be controlled. In other words, when the temperatures are to be controlled in the priority order, it means that a temperature of a region of the HUD having a highest priority in the priority order is controlled first, then a temperature of another region of the HUD having a second-highest priority in the priority order is controlled, then a temperature of yet another region of the HUD having a third-highest priority in the priority order is controlled, and so on. In an example, the priority order may be determined in a manner the temperatures of the plurality of regions are controlled in a decreasing order of priorities of the plurality of regions. There will now be described each basis on which the priority order is determined.

It will be appreciated that when the temperature of the given region lies closer to the predefined operating temperature range, it may be likely that the temperature of the given region could be brought within the predefined operating temperature range (either by heating or cooling using the temperature controlling unit) in considerably lesser time, as compared to a case when the temperature of the given region lies relatively farther from the predefined operating temperature range. Optionally, in the regard, when determining the priority order based on the temperatures of the plurality of regions, the at least one processor is configured to assign a higher priority to a region whose temperature lies closer to the predefined operating temperature range, as compared to another region whose temperature lies relatively farther from the predefined operating temperature range. It will be appreciated that a temperature can be considered to lie close to the predefined operating temperature range when said temperature is within 5 degrees of a lower limit or an upper limit of the predefined operating temperature range. Otherwise, said temperature can be considered to lie far from the predefined operating temperature range. However, the temperatures can be compared relative to each other, as mentioned above. In this regard, the phrase "relatively farther from the predefined operating temperature range" is to be considered relative to the term "closer to the predefined operating temperature range".

In example, when the predefined operating temperature range is 0 degree Celsius to +50 degree Celsius, a temperature of +52 degree Celsius is prioritised over a temperature of +57 degree Celsius, in the priority order. Furthermore, greater the importance level that is pre-assigned to the given virtual content that is to be presented via the given region, greater is the priority assigned to the temperature corresponding to the given region, and vice versa. Throughout the present disclosure, the term *"importance level"* refers to a measure that is indicative of how important (namely, significant or critical) is the given virtual content that is to be presented via the given region. When the importance level of the given virtual content is higher, it means that a presentation of the given virtual content is critical for the user, for example, when the given virtual content comprises any information pertaining to safety of the user present inside the vehicle. Therefore, the temperature corresponding to the given region is to be controlled at a higher priority (to allow for presenting the given virtual content), as compared to the temperature corresponding to the another given region. Optionally, the importance level that is pre-assigned to the given virtual content lies in a range of 0 to 1, wherein '0' indicates a minimum importance level (namely, a least importance level) and '1' indicates a maximum importance level (namely, most importance level). Alternatively, optionally, the importance level that is pre-assigned to the given virtual content lies in a range of 1 to 100, wherein '1' indicates a minimum importance level and '100' indicates a maximum importance level. It will be appreciated that two or more regions could have a same priority in the priority order. In such a case, respective temperatures of the two or more regions may be simultaneously controlled using the temperature controlling unit.

Once the priority order is determined, the temperatures of the plurality of regions are controlled accordingly (in a same manner as discussed earlier). Beneficially, in this way, a prioritised thermal control is implemented for the HUD, which facilitates in presenting any virtual content in an accurate and convenient manner, especially, when critical information is to be presented (via the virtual content) to the user at a priority (such as immediately upon the vehicle start-up), in comparison to other type of information that is relatively less critical for the user at a given time . Such critical information may pertain to an instrumentation of the vehicle and/or a synthetic rear view of the vehicle, as described hereinbelow in detail. The system and the method are susceptible to be implemented in any type of environment irrespective of a temperature of the environment (for example, whether the environment is an extremely hot environment or an extremely cold environment).

Optionally, an importance level that is pre-assigned to first virtual content pertaining to an instrumentation of the vehicle is higher than an importance level that is pre-assigned to second virtual content pertaining to a synthetic rear view. In this regard, in a scenario when the vehicle is started, the first virtual content pertaining to the instrumentation of the vehicle is to be presented to the user immediately or near-immediately, because it comprises critical information (for example, such as a speed of the vehicle, a direction indication, a fuel indication, a pressure indication, and the like) required for initiating driving of the vehicle. Thereafter, the second virtual content pertaining to the synthetic rear view could be presented to the user. The term *"synthetic rear view"* refers to a synthetic view of a region of the surrounding environment that is behind the vehicle. Presenting the synthetic rear view to the user may ensure user safety and improved rear visibility during driving, as it allows the user to view the region of the surrounding environment that is behind the vehicle (for example, while changing lanes, reversing the vehicle, parking the vehicle, monitoring traffic conditions, and the like) during driving. Therefore, since presenting the instrumentation of the vehicle is more critical than presenting the synthetic rear view, the importance level of the first virtual content is higher than the importance level of the second virtual content. The technical benefit of having the importance level of the first virtual content being higher than the importance level of the second virtual content is that in the priority order, a region via which the first virtual content is to be presented to the user has a higher priority and thus its temperature is controlled prior to controlling a temperature of another region via which the second virtual content is to be presented to the user. In this way, the instrumentation of the vehicle could be beneficially presented to the user immediately or near-immediately at the vehicle start-up. The instrumentation of the vehicle may comprise at least one of: a speedometer, a direction indicator, a navigator, a fuel indicator, a temperature indicator, an odometer, a pressure indicator, of the vehicle.

Optionally, the at least one processor is configured to generate the synthetic rear view by utilising at least one rear-view image of the region of the surrounding environment that is behind the vehicle, wherein the at least one rear-view image being captured by at least one rear-view camera being arranged on a rear part of the vehicle in a manner that the at least one rear-view camera faces the region of the surrounding environment that is behind the vehicle.

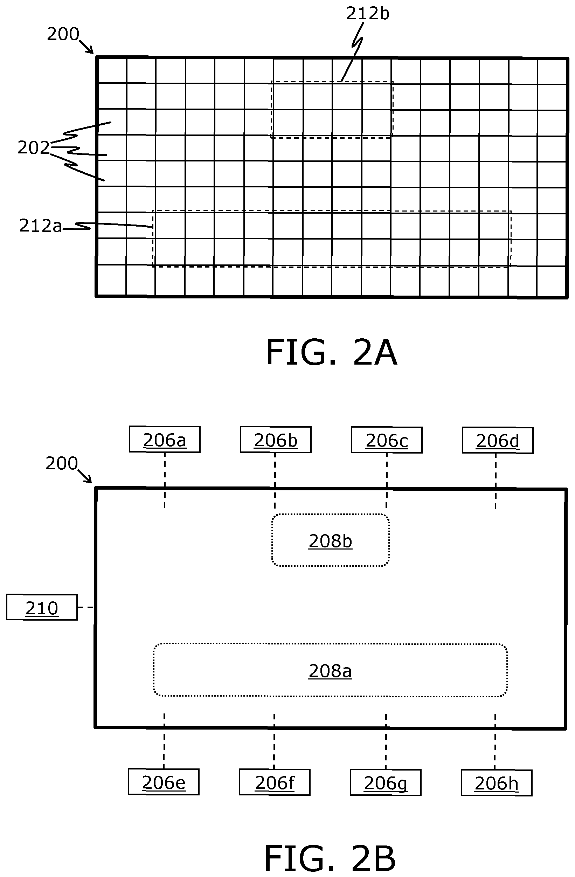

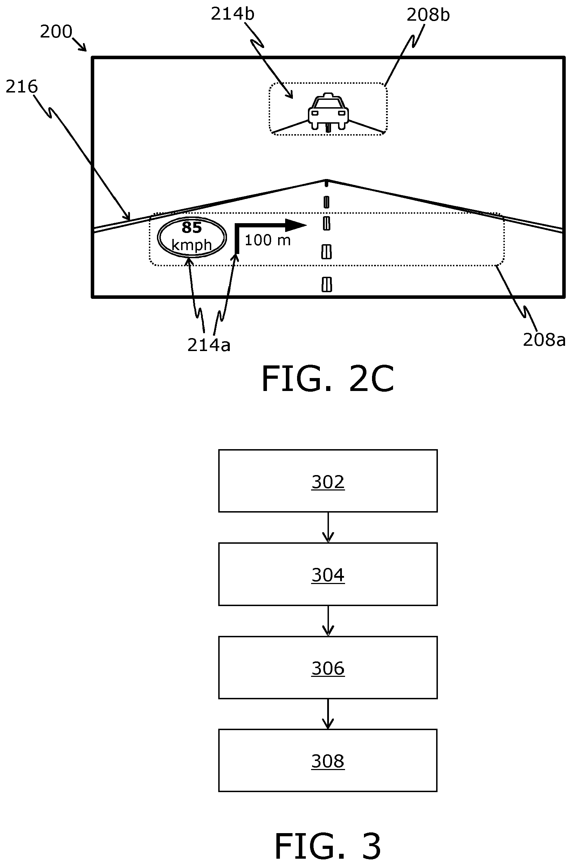

Optionally, an entirety of the HUD is divided into a grid of a plurality of grid segments, wherein a given region of the HUD corresponds to at least one grid segment from amongst the plurality of grid segments, wherein the at least one processor is configured to control a temperature of the at least one grid segment by using the temperature controlling unit, for controlling a temperature of the given region of the HUD. It will be appreciated that the plurality of grid segments of the grid may be arranged in a regular-matrix pattern or a tiled pattern. In an example, the first virtual content pertaining to the instrumentation of the vehicle is to be presented via a region corresponding to 24 grid segments of the grid, while the second virtual content pertaining to the synthetic rear view is to be presented via a region corresponding to 8 grid segments of the grid. This has been also illustrated in conjunction with FIGs. 2A, 2B, and 2C, for sake of better understanding and clarity.

Optionally, the priority order is determined based further on whether a given region of the heads-up display is to be employed to present any virtual content. In this regard, it may not necessary that the virtual content is to be presented via an entirety of the HUD (namely, via each and every region of the HUD). When the given region of the HUD is not to be employed to present any virtual content (namely, when the given region in the HUD is empty/blank), a temperature of the given region has a lowest (namely, minimum) priority in the priority order. However, when the given region of the HUD is to be employed to present any virtual content, a temperature of the given region has a priority that is relatively higher than the lowest priority in the priority order. The technical benefit of this is that the at least one processor can utilise the temperature controlling unit judiciously for controlling temperatures of those regions of the HUD via which any virtual content is to be presented to the user, instead of controlling temperatures of those regions that are empty or blank. This may potentially facilitate in controlling the temperatures in real time or near-real time (without any significant latency), and also in reducing an energy consumption of the temperature controlling unit.

Optionally, the at least one processor is configured to:
detect when a user intends to operate the vehicle; and
when it is detected that the user intends to operate the vehicle, trigger the steps of determining the temperatures, detecting when the temperatures lie outside the predefined operating temperature range, determining the priority order, and controlling the temperatures.

In this regard, when it is detected that the user intends to operate the vehicle, the technical benefit of performing the aforementioned steps is that by the time the user starts the vehicle, the plurality of regions of the HUD would be well-operable to present any virtual content to the user immediately or near-immediately upon vehicle start-up. This is possible because an effective time required for controlling the temperatures considerably increases, when the aforementioned steps are performed pre-emptively (i.e., when the user intends to operate the vehicle, but has not yet started the vehicle), as compared to a case when the aforementioned steps are performed at a time when the user is present inside the vehicle or at a time when the user starts the vehicle. Thus, in this way, heating or cooling of the plurality of regions could be done more conveniently and in a relatively faster manner, in order to bring the temperatures of the plurality of regions within the predefined operating temperature range. This also potentially improves a viewing experience of the user, when the virtual content (for example, pertaining to the instrumentation of the vehicle) is presented to the user, immediately upon the vehicle start-up.

Optionally, the user is considered to be intending to operate the vehicle, when at least one of the following is satisfied:
(i) when a proximity sensor of the vehicle detects a presence of the user approaching the vehicle,
(ii) when a sensor of the vehicle detects that the vehicle has been unlocked by the user using an electronic device (for example, such as a smartphone, a smartwatch, a laptop, a Radio Frequency Identification (RFID) device, and the like),
(iii) when a sensor of the vehicle detects that the vehicle has been manually unlocked by the user using a key,
(iv) when an event camera of the vehicle is employed to detect any dynamic change, for example, such as a movement of the user towards the vehicle, by continuously monitoring an area surrounding the vehicle,
(v) when a tactile sensor of the vehicle detects a touch of the user on a body of the vehicle.

Optionally, the at least one processor is configured to:
whilst the temperatures of the plurality of regions are being controlled according to the priority order,
detect when a temperature of a first region of the heads-up display via which virtual content, whose importance level is higher than a predefined threshold level, is to be presented lies outside the predefined operating temperature range, but a temperature of a second region of the heads-up display lies within the predefined operating temperature range; and
when it is detected that the temperature of the first region lies outside the predefined operating temperature range, but the temperature of the second region lies within the predefined operating temperature range, present the virtual content via the second region of the heads-up display, instead of the first region.

In this regard, when the importance level of the virtual content (for example, pertaining to the instrumentation of the vehicle or the synthetic rear view of the vehicle) is higher than the predefined threshold level, it means that the virtual content is highly critical and is to be presented to the user immediately. However, said virtual content could not be presented immediately via the first region of the HUD as its (current) temperature lies outside the predefined operating temperature range. In order to mitigate this potential issue, the virtual content is presented via the second region of the HUD, instead of the first region, as the temperature of the second region lies within the predefined operating temperature range. The technical benefit of this is that critical information (as represented by the virtual content) could be conveniently displayed to the user in real time or near-real time (for example, immediately upon the vehicle start-up) and thus would not be missed or delayed. This is particularly beneficial when a region of the HUD that is actually supposed to present the virtual content, is inoperable at a time instant, due to its temperature being lying outside the predefined operating temperature range. Optionally, the predefined threshold level is 70 percent of a maximum importance level that is pre-assigned to the virtual content.

Optionally, the at least one processor is configured to determine the priority order based on the temperatures of the plurality of regions, by identifying a subset of the plurality of regions whose respective temperatures lie closer to the predefined operating temperature range than a remainder of the plurality of regions, and by prioritising the subset over the remainder at least partially.

In this regard, there could be some regions of the HUD that are slightly warmer (for example, due to an exposure to sunlight) or slightly cooler (for example, due to an exposure to a mild cold breeze), as compared to other, remaining regions of the HUD. In such a scenario, respective temperatures of the regions of the HUD that are slightly warmer or slightly cooler would likely lie closer to the predefined operating temperature range as compared to the other, remaining regions of the HUD. Since the temperatures of the plurality of regions are determined repeatedly, and the predefined operating temperature range is known, the at least one processor could easily identify the subset of the plurality of regions whose respective temperatures lie closer to the predefined operating temperature range. Additionally, the at least one processor could also identify the remainder of the plurality of regions whose respective temperatures lie relatively farther from the predefined operating temperature range. The technical benefit of prioritising the subset over the remainder at least partially is that the respective temperatures of the plurality of regions belonging to the subset could be easily brought within the predefined operating temperature range in relatively lesser time, as compared to the remainder of the plurality of regions. This is possible because the respective temperatures lie relatively closer to the predefined operating temperature range, and a minimal degree of heating or cooling may be required to be performed for the plurality of regions belonging to the subset, in order to bring the respective temperatures within the predefined operating temperature range. Thus, in this way, the plurality of regions belonging to the subset could be a viable choice for presenting any virtual content (for example, pertaining to the instrumentation of the vehicle) immediately to the user, upon controlling the respective temperatures of the plurality of regions belonging to the subset. It will be appreciated that by *"at least partially",* it is meant that not all the regions belonging to the subset need to be prioritised over all the regions in the remainder.

Optionally, the at least one processor is configured to:
whilst the temperatures of the plurality of regions are being controlled according to the priority order,
detect when a region of the heads-up display via which virtual content, whose importance level is higher than a predefined threshold level, is to be presented belongs to the remainder of the plurality of regions; and
when it is detected that said region belongs to the remainder, present the virtual content via another region belonging to the subset of plurality of regions, instead of said region.

In this regard, when the importance level of the virtual content (for example, pertaining to the instrumentation of the vehicle or the synthetic rear view of the vehicle) is higher than the predefined threshold level, it means that the virtual content is highly critical and is to be presented to the user immediately. However, when the virtual content is to be presented via the region belonging the remainder of the plurality of regions, the virtual content would likely be presented with a latency because a temperature of said region belonging to the remainder lies relatively farther from the predefined operating temperature range. Due to this, a considerable degree of heating or cooling and a considerable time may be required by the temperature controlling unit for said region belonging to the remainder, in order to bring the temperature of said region within the predefined operating temperature range. In order to mitigate this potential issue, the virtual content is presented via the another region belonging to the subset of plurality of regions, instead of said region, as a temperature of the another region lies closer to the predefined operating temperature range. The technical benefit of this is that critical information (as represented by the virtual content) could be conveniently displayed to the user in real time or near-real time (for example, immediately upon the vehicle start-up) and thus would not be missed or delayed. This may potentially improve a viewing experience of the user, when the virtual content is presented to the user, for example, immediately upon the vehicle start-up.

Optionally, the at least one processor is configured to:
whilst the temperatures of the plurality of regions are being controlled according to the priority order,
present the virtual content via the heads-up display at an optical depth that is within a predefined threshold distance from a native optical depth of the heads-up display from a user.

In this regard, when the temperatures of the plurality of regions are being controlled according to the priority order, it may not be necessary or beneficial to present the virtual content to the user in an autostereoscopic manner. This is because for accurately presenting an autostereoscopic view of the virtual content, it is essential that the temperatures of the plurality of regions are within the predefined operating temperature range, i.e., the plurality of regions are well-operable to present any virtual content in an autostereoscopic manner, while heating/cooling of the plurality of regions is not in progress. Therefore, in order to avoid an inaccurate or incomplete autostereoscopic presentation of the virtual content, the virtual content instead, is presented at the optical depth that is within the predefined threshold distance (for example, 10 centimetres (cm) or similar) from the native optical depth of the HUD from the user. The technical benefit of this is that while the heating/cooling of the plurality of regions is still in progress, the user would be presented with a 2D view, yet an accurate and complete view of the virtual content, irrespective of a location of the user within the vehicle. In a typical implementation inside the vehicle, the native optical depth may lie in a range of 100 cm to 300 cm.

Optionally, the heads-up display comprises a backlight, wherein the at least one processor is configured to control the heads-up display to operate at least a portion of the backlight at a full intensity, wherein said portion of the backlight corresponds to at least one region of the heads-up display that has a higher priority than remaining regions of the heads-up display.

The technical benefit of operating at least the portion of the backlight at the full intensity is that when a temperature of the at least one region is to be increased (namely, when the at least one region is to be heated) to bring the temperature of the at least one region within the predefined operating temperature range, at least the portion of the backlight can be operated at the full intensity in order to aid in said heating (along with the temperature controlling unit). This is possible because when the backlight is typically operated at the full intensity, high electrical power is consumed to produce a maximum illumination (namely, brightness). Such a process generates excess energy, part of which is released as heat. Greater the intensity with which the backlight is operated, greater is the electrical power consumed to produce a greater illumination, and consequently, greater is the amount of heat that is generated. Such a heat is typically a byproduct of inefficiencies involved in a light-emitting process of the backlight, and due to a resistance of other electrical components of the HUD. The term *"backlight"* refers to a light-emitting element that is capable of illuminating and heating the at least one region of the HUD by way of producing white light. The backlight is well-known in the art. It is to be understood that the HUD comprises the backlight, when the HUD comprises the LCD, as no backlight is used when the HUD comprises the transparent display (such as the OLED-based display).

Optionally, the system further comprises at least one sensor employed to detect a current setting of at least one adjustable seat parameter of the vehicle, wherein the at least one processor is configured to:
determine a three-dimensional (3D) volume where a user's head is likely to be present, based on the current setting of the at least one adjustable seat parameter; and
select, from amongst the plurality of regions, at least one region for presenting virtual content whose importance level is higher than a predefined threshold level, based on the 3D volume where the user's head is likely to be present.

The term *"sensor"* refers to equipment that is operable to detect (namely, sense) a current setting of a given adjustable seat parameter of the vehicle. In some implementations, the at least one sensor is employed to detect the current setting for at least one front seat of the vehicle. In other implementations, the at least one sensor is employed to detect the current setting for at least one back seat of the vehicle. In yet other implementations, the at least one sensor is employed to detect the current setting for both the at least one front seat and the at least one back seat of the vehicle (namely, for all seats of the vehicle).

The term *"adjustable seat parameter"* refers to a characteristic of the seat (or its part) that can be modified to accommodate different preferences or requirements of the user. It is to be understood that seat parameters are typically designed to be adjustable (namely, customizable) for allowing the user to tailor a seat configuration according to his/her need for comfort and ergonomics. Furthermore, the term *"current setting"* of a given adjustable seat parameter refers to a current state of the characteristic of the seat (or its part). Optionally, the current setting of the at least one adjustable seat parameter is represented in a given coordinate space. Optionally, the at least one adjustable seat parameter comprises at least one of: a position of the seat, an orientation of a backrest of the seat, a height of a lower part of the seat from a floor of the vehicle, an orientation of the lower part of the seat, a position of a neck support of the seat, an orientation of the neck support, a curvature of a lumbar support of the seat.

Optionally, the at least one sensor comprises at least one camera, wherein the at least one processor is configured to process at least one image captured by the at least one camera, to determine the current setting of the at least one adjustable seat parameter. In this regard, the at least one image represents visual information pertaining to at least the seat of the vehicle. Optionally, when processing the at least one image, the at least one processor is configured to: extract a plurality of features from the at least one image; identify the seat, based on the plurality of features; and determine the current setting of the at least one adjustable seat parameter for the identified seat by utilising a 3D model of the seat. The aforesaid identification of the seat could be performed using at least one object detection algorithm and at least one object segmentation algorithm, to isolate a relevant part of the at least one image from its background. The term *"three-dimensional model of a seat"* refers to a data structure that comprises comprehensive information pertaining to the seat. Beneficially, the current setting determined in the aforesaid manner is highly accurate and reliable, and thus facilitates in determining the 3D volume where the user's head is likely to be present accurately (as discussed later). The 3D model of the seat may be generated in the form of a 3D polygonal mesh, a 3D point cloud, a 3D surface cloud, a voxel-based model, or similar. Optionally, the 3D model of the seat is generated in the given coordinate space. Optionally, the at least one processor is configured to store the 3D model of the seat at a data repository that is communicably coupled to the at least one processor. The data repository may be implemented as a memory of the at least one processor, a memory of the computing device, a cloud-based database, or similar. Additionally, optionally, the at least one sensor further comprises at least one of: a position sensor, an orientation sensor, a height sensor, a pressure sensor. All the aforesaid sensors are well-known in the art.

The term *"three-dimensional volume"* refers to a portion of a 3D space of the vehicle in which the user's head is likely to be present. In other words, the 3D volume can be understood to be a volume inside the vehicle in which each point indicates a realistically possible (namely, a physically possible) location of the user's head. The 3D volume need not necessarily have a definite shape and/or size, and thus could have any shape and/or size.

It will be appreciated that the current setting of the at least one adjustable seat parameter allows the at least one processor to ascertain a comprehensive understanding of a seating posture of the user within the vehicle (namely, the user's spatial relationship within the vehicle). Such a comprehensive understanding allows the at least one processor to accurately estimate likely positions of the user's head within the 3D space of the vehicle, in order to determine the 3D volume. As an example, a combination of two or more adjustable seat parameters may provide a spatial context for a position of the user within the vehicle, which facilitates in ascertaining a reference frame for estimating the user's head positions. As another example, some adjustable seat parameters, for example, such as the curvature of the lumbar support curvature and the orientation of the neck support may directly influence a user's posture and a head position within the vehicle, which facilitates in ascertaining likely locations of the user's head within a vehicle space. As the user may change his/her seating posture or may adjust the at least one adjustable seat parameters, the at least one processor would continuously update its understanding of the user's spatial relationship within the vehicle. Such a dynamic adaptation potentially ensures accurate and responsive determination of the 3D volume where the user's head is likely to be present.

It will be appreciated that when the importance level of the virtual content (for example, pertaining to the instrumentation of the vehicle) is higher than the predefined threshold level, it means that the virtual content is highly critical and is to be presented to the user immediately. Thus, in such a case, the at least one region where the virtual content is to be presented, is selected in a manner that the at least one (selected) region well-corresponds with the 3D volume where the user's head is likely to be present, as the at least one region could, for example, be directly aligned with a line of sight of the user or with a part of field of view of the user where the user mostly gazes. Moreover, in case of the 3D heads-up display, the location of the user's head is tracked in order to display images in an autostereoscopic manner. This is because a location of the at least one region where the virtual content is to be presented depends on the location of the user's head (and naturally, also on a 3D location where the virtual content is intended to be shown). Therefore, when it is known where the user's head is likely to be present, it facilitates in selecting the at least one region for presenting the virtual content, and prioritising heating/cooling in the at least one selected region. The technical benefit of selecting the at least one region in this manner would likely ensure that the virtual content is highly accurately and conveniently perceived by the user, when said virtual content would be displayed via the at least one region.

The present disclosure also relates to the method as described above. Various embodiments and variants disclosed above, with respect to the aforementioned first aspect, apply *mutatis mutandis* to the method.

Optionally, in the method, an importance level that is pre-assigned to first virtual content pertaining to an instrumentation of the vehicle is higher than an importance level that is pre-assigned to second virtual content pertaining to a synthetic rear view.

Optionally, in the method, the priority order is determined based further on whether a given region of the heads-up display is to be employed to present any virtual content.

Optionally, the method further comprises:
detecting when a user intends to operate the vehicle; and
when it is detected that the user intends to operate the vehicle, triggering the steps of determining the temperatures, detecting when the temperatures lie outside the predefined operating temperature range, determining the priority order, and controlling the temperatures.

Optionally, the method further comprises:
whilst the temperatures of the plurality of regions are being controlled according to the priority order,
detecting when a temperature of a first region of the heads-up display via which virtual content, whose importance level is higher than a predefined threshold level, is to be presented lies outside the predefined operating temperature range, but a temperature of a second region of the heads-up display lies within the predefined operating temperature range; and
when it is detected that the temperature of the first region lies outside the predefined operating temperature range, but the temperature of the second region lies within the predefined operating temperature range, presenting the virtual content via the second region of the heads-up display, instead of the first region.

Optionally, the method further comprises determining the priority order based on the temperatures of the plurality of regions, by identifying a subset of the plurality of regions whose respective temperatures lie closer to the predefined operating temperature range than a remainder of the plurality of regions, and by prioritising the subset over the remainder at least partially.

Optionally, the method further comprises:
whilst the temperatures of the plurality of regions are being controlled according to the priority order,
detecting when a region of the heads-up display via which virtual content, whose importance level is higher than a predefined threshold level, is to be presented belongs to the remainder of the plurality of regions; and
when it is detected that said region belongs to the remainder, presenting the virtual content via another region belonging to the subset of plurality of regions, instead of said region.

Optionally, the method further comprises:
whilst the temperatures of the plurality of regions are being controlled according to the priority order,
presenting the virtual content via the heads-up display at an optical depth that is within a predefined threshold distance from a native optical depth of the heads-up display from a user.

Optionally, the method further comprises controlling the heads-up display to operate at least a portion of a backlight at a full intensity, wherein said portion of the backlight corresponds to at least one region of the heads-up display that has a higher priority than remaining regions of the heads-up display, wherein the heads-up display comprises the backlight.

Optionally, in the method, at least one sensor is employed for detecting a current setting of at least one adjustable seat parameter of the vehicle, wherein the method further comprising:
determining a three-dimensional (3D) volume where a user's head is likely to be present, based on the current setting of the at least one adjustable seat parameter; and
selecting, from amongst the plurality of regions, at least one region for presenting virtual content whose importance level is higher than a predefined threshold level, based on the 3D volume where the user's head is likely to be present.

### DETAILED DESCRIPTION OF THE DRAWINGS

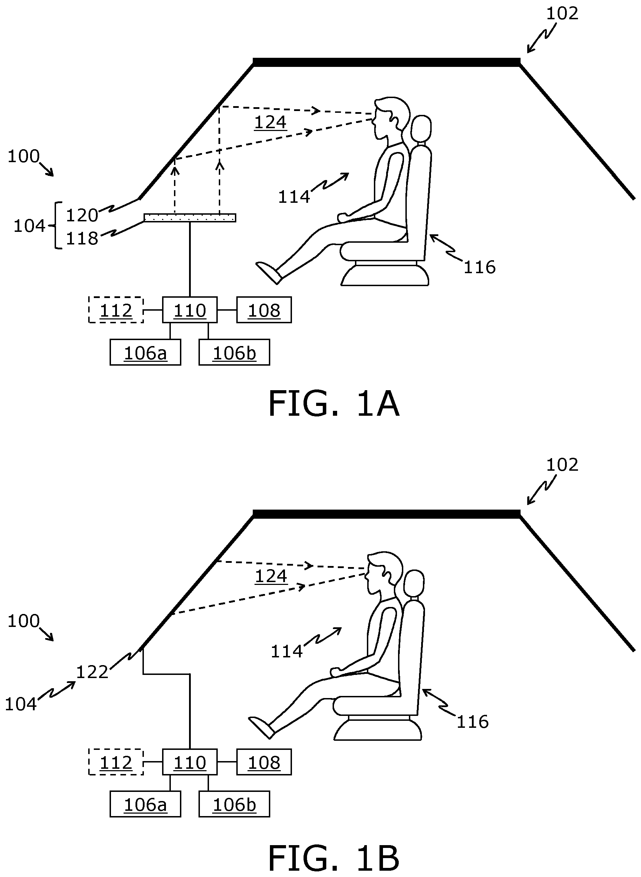

Referring to FIGs. 1A and 1B, illustrated are simplified example implementations of a system **100** incorporating a prioritised thermal control for a heads-up display in a vehicle **102,** in accordance with different embodiments of the present disclosure. With reference to FIGs. 1A and 1B, the system **100** is shown to be implemented in the vehicle **102** (for example, such as a car). The system **100** comprises a heads-up display **104,** a plurality of temperature sensors (for example, depicted as two temperature sensors **106a** and **106b),** a temperature controlling unit **108,** and at least one processor (for example, depicted as a processor **110).** Optionally, the system **100** further comprises at least one sensor (for example, depicted as a sensor **112).** The processor **110** is communicably coupled to the heads-up display **104,** the temperature sensors **106a-b,** the temperature controlling unit **108,** and optionally, to the sensor **112.** The processor **110** is configured to perform various operations, as described earlier with respect to the aforementioned first aspect. A user **114** is also shown to be seated on a seat **116** of the vehicle **102.**

With reference to FIG. 1A, the heads-up display **104** is shown to be comprise a light field display unit **118** and an optical combiner **120,** wherein the optical combiner **120** is arranged on an optical path of the light field display unit **118** and on an optical path of a real-world light field incoming from a front windshield (not shown) of the vehicle **102.** In such an implementation, the front windshield of the vehicle may be utilised as the optical combiner **120.** Moreover, in such an implementation, the light field display unit **118** may be implemented as a liquid-crystal display (LCD) with a backlight (not shown). With reference to FIG. 1B, the heads-up display **104** is shown to comprise a transparent display **122.** The transparent display could, for example, be implemented as any one of: an organic light-emitting diode (OLED)-based transparent display, a micro light-emitting diode (µLED)-based transparent display. With reference to FIGs. 1A and 1B, any virtual content is presented via the heads-up display **104,** for example, by way of producing a synthetic light field **124** (for example, shown using dashed lines with arrows).

It may be understood by a person skilled in the art that FIGs. 1A and 1B include simplified example implementations of a system **100,** for sake of clarity, which should not unduly limit the scope of the claims herein. It is to be understood that a specific implementation of the system **100** is not to be construed as limiting it to specific numbers or types of processors, heads-up displays, temperature sensors, temperature controlling units, light field display units, optical combiners, and transparent displays. The person skilled in the art will recognize many variations, alternatives, and modifications of embodiments of the present disclosure.

Referring to FIGs. 2A, 2B, and 2C, FIG. 2A illustrates an exemplary heads-up display **200** of a vehicle being divided into a grid of a plurality of grid segments **202,** FIG. 2B illustrates two exemplary regions **208a** and **208b** of the heads-up display **200,** while FIG. 2C illustrates an exemplary scenario of presenting given virtual content via a given region of the heads-up display **200,** in accordance with an embodiment of the present disclosure. The vehicle could, for example, be a car (not shown). A view of the heads-up display **200** is shown in FIGs. 2A, 2B, and 2C from a perspective of a user seated inside the vehicle.

With reference to FIG. 2A, for sake of simplicity and clarity, the heads-up display **200** is shown to be divided into 144 grid segments (for example, depicted using a 9x16 array of grid segments). Optionally, the given region of the heads-up display **200** corresponds to at least one grid segment from amongst the 144 grid segments, wherein at least one processor (not shown) is configured to control a temperature of the at least one grid segment by using a temperature controlling unit, for controlling a temperature of the given region of the heads-up display **200.**

With reference to FIG. 2B, for sake of simplicity and clarity, the heads-up display **200** is shown to comprise the two regions, **208a** and **208b.** In a real implementation, the heads-up display **200** may comprise more than two regions. Further, 8 temperature sensors **206a, 206b, 206c, 206d, 206e, 206f, 206g, 206h** are arranged to sense temperatures of a plurality of regions of the heads-up display. The two temperature sensors **206b** and **206c** are used to determine a temperature of the region **208b,** while the four temperature sensors **206e** and **206h** are used to determine a temperature of the region **208a.** The remaining two temperature sensors **206a** and **206d** can be used to determine a temperature of any other region(s) (now shown) of the heads-up display **200.**

When the temperatures of the regions **208a** and **208b** lie outside a predefined operating temperature range of the heads-up display **200,** the temperatures of the regions **208a** and **208b** are controlled according to a priority order, by using a temperature controlling unit **210** to bring the temperatures of the regions **208a** and **208b** within the predefined operating temperature range. Notably, the priority order is determined, based on at least one of: the temperatures of the regions **208a** and **208b,** an importance level that is pre-assigned to the given virtual content that is to be presented via the given region of the heads-up display **200.** In an example, the priority order may be in a decreasing order of priorities: the region **208a,** the region **208b.** With reference to FIGs. 2A and 2B, a group **212a** of 24 grid segments in FIG. 2A corresponds to the region **208a** in FIG. 2B, while a group **212b** of 8 grid segments on FIG. 2A corresponds to the region **208b** in FIG. 2B.

In an example, the first virtual content pertaining to the instrumentation of the vehicle is to be presented via a region corresponding to 24 grid segments of the grid, while the second virtual content pertaining to the synthetic rear view is to be presented via a region corresponding to 8 grid segments of the grid.

With reference to FIG. 2C, first virtual content **214a** is shown to be presented via the region **208a** of the heads-up display **200,** wherein the first virtual content **214a** pertains to an instrumentation (for example, such as a speedometer, an odometer, a navigation unit, and the like) of the vehicle. As shown, the first virtual content **214a** represents a speed (for example, 85 kilometres per hour (kmph)) of the vehicle, and a navigation instruction (for example, proceed straight for 100 meters and make a right turn, as indicated using an arrow and a distance value).

Further, second virtual content **214b** is shown to be presented via the region **208b** of the heads-up display **200,** wherein the second virtual content **214b** pertains to a synthetic rear view of a region of a surrounding environment (not shown) that is behind the vehicle. As shown, the second virtual content **214b** represents another vehicle (for example, such as another car) that is approaching the vehicle from behind. Optionally, the synthetic rear view is generated by utilising at least one rear-view image of the region of the surrounding environment that is behind the vehicle, wherein the at least one rear-view image being captured by at least one rear-view camera (not shown) being arranged on a rear part of the vehicle in a manner that the at least one rear-view camera faces the region of the surrounding environment that is behind the vehicle.

With reference to FIGs. 2A, 2B, and 2C, the heads-up display **200** is shown to be implemented as a transparent display (for example, such as an organic light-emitting diode (OLED)-based transparent display). However, when the heads-up display comprises a light field display unit and an optical combiner, the temperature sensor and the temperature controlling unit are arranged with respect to the light field display unit in a similar manner. Moreover, in such an implementation, the light field display unit is divided into a grid of a plurality of grid segments **202,** as shown in FIG. 2A, in a similar manner. It is to be noted that since the heads-up display **200** is shown to comprise the transparent display (as discussed hereinabove); therefore real-world object(s) **216** (for example, depicted as a road on which the vehicle is being driven, as shown in FIG. 2C) present in a region of the surrounding environment that is in front of the vehicle, is/are also perceived by eyes of a user sitting inside the vehicle, in addition to the first virtual content and/or the second virtual content.

FIGs. 2A, 2B, and 2C are merely examples, which should not unduly limit the scope of the claims herein. A person skilled in the art will recognize many variations, alternatives, and modifications of embodiments of the present disclosure.

Referring to FIG. 3, illustrated are steps of a method incorporating a prioritised thermal control for a heads-up display in a vehicle, in accordance with an embodiment of the present disclosure. At step **302,** temperatures of a plurality of regions of a heads-up display are determined using a plurality of temperature sensors, wherein the plurality of temperature sensors corresponds to the plurality of regions of the heads-up display. At step **304,** it is detected when the temperatures of the plurality of regions lie outside a predefined operating temperature range of the heads-up display. When it is detected that the temperatures of the plurality of regions lie outside the predefined operating temperature range, at step **306,** a priority order according to which the temperatures of the plurality of regions are to be controlled, is determined, based on at least one of: the temperatures of the plurality of regions, an importance level that is pre-assigned to given virtual content that is to be presented via a given region of the heads-up display. At step **308,** the temperatures of the plurality of regions according to the priority order, by using a temperature controlling unit to bring the temperatures of the plurality of regions within the predefined operating temperature range.

The aforementioned steps are only illustrative and other alternatives can also be provided where one or more steps are added, one or more steps are removed, or one or more steps are provided in a different sequence without departing from the scope of the claims herein.

## Claims

1. A system (100) implemented in a vehicle (102), the system comprising:
a heads-up display (104, 200);
a plurality of temperature sensors (106a-b, 206a-h) corresponding to a plurality of regions (208a-b) of the heads-up display;
a temperature controlling unit (108, 210); and
at least one processor (110) configured to:
determine, using the plurality of temperature sensors, temperatures of the plurality of regions of the heads-up display;
detect when the temperatures of the plurality of regions lie outside a predefined operating temperature range of the heads-up display; and
when it is detected that the temperatures of the plurality of regions lie outside the predefined operating temperature range,
determine a priority order according to which the temperatures of the plurality of regions are to be controlled, based on at least one of: the temperatures of the plurality of regions, an importance level that is pre-assigned to given virtual content (214a-b) that is to be presented via a given region of the heads-up display; and
control the temperatures of the plurality of regions according to the priority order, by using the temperature controlling unit to bring the temperatures of the plurality of regions within the predefined operating temperature range.

2. The system (100) of claim 1, wherein an importance level that is pre-assigned to first virtual content (214a) pertaining to an instrumentation of the vehicle (102) is higher than an importance level that is pre-assigned to second virtual content (214b) pertaining to a synthetic rear view.

3. The system (100) of any of the preceding claims, wherein the priority order is determined based further on whether a given region (208a-b) of the heads-up display (104, 200) is to be employed to present any virtual content (214a-b).

4. The system (100) of any of the preceding claims, wherein the at least one processor (110) is configured to:
detect when a user (114) intends to operate the vehicle (102); and
when it is detected that the user intends to operate the vehicle, trigger the steps of determining the temperatures, detecting when the temperatures lie outside the predefined operating temperature range, determining the priority order, and controlling the temperatures.

5. The system (100) of any of the preceding claims, wherein the at least one processor (110) is configured to:
whilst the temperatures of the plurality of regions (208a-b) are being controlled according to the priority order,
detect when a temperature of a first region of the heads-up display (104, 200) via which virtual content (214a-b), whose importance level is higher than a predefined threshold level, is to be presented lies outside the predefined operating temperature range, but a temperature of a second region of the heads-up display lies within the predefined operating temperature range; and
when it is detected that the temperature of the first region lies outside the predefined operating temperature range, but the temperature of the second region lies within the predefined operating temperature range, present the virtual content via the second region of the heads-up display, instead of the first region.

6. The system (100) of any of the preceding claims, wherein the at least one processor (110) is configured to determine the priority order based on the temperatures of the plurality of regions (208a-b), by identifying a subset of the plurality of regions whose respective temperatures lie closer to the predefined operating temperature range than a remainder of the plurality of regions, and by prioritising the subset over the remainder at least partially.

7. The system (100) of claim 6, wherein the at least one processor (110) is configured to:
whilst the temperatures of the plurality of regions (208a-b) are being controlled according to the priority order,
detect when a region of the heads-up display (104, 200) via which virtual content (214a-b), whose importance level is higher than a predefined threshold level, is to be presented belongs to the remainder of the plurality of regions; and
when it is detected that said region belongs to the remainder, present the virtual content via another region belonging to the subset of plurality of regions, instead of said region.

8. The system (100) of any of the preceding claims, wherein the at least one processor (110) is configured to:
whilst the temperatures of the plurality of regions (208a-b) are being controlled according to the priority order,
present the virtual content (214a-b) via the heads-up display (104, 200) at an optical depth that is within a predefined threshold distance from a native optical depth of the heads-up display from a user (114).

9. The system (100) of any of the preceding claims, wherein the heads-up display (104, 200) comprises a backlight, wherein the at least one processor (110) is configured to control the heads-up display to operate at least a portion of the backlight at a full intensity, wherein said portion of the backlight corresponds to at least one region of the heads-up display that has a higher priority than remaining regions of the heads-up display.

10. The system (100) of any of the preceding claims, further comprising at least one sensor (112) employed to detect a current setting of at least one adjustable seat parameter of the vehicle (102), wherein the at least one processor (110) is configured to:
determine a three-dimensional (3D) volume where a user's head is likely to be present, based on the current setting of the at least one adjustable seat parameter; and
select, from amongst the plurality of regions (208a-b), at least one region for presenting virtual content (214a-b) whose importance level is higher than a predefined threshold level, based on the 3D volume where the user's head is likely to be present.

11. A method implemented in a vehicle (102), the method comprising:
determining temperatures of a plurality of regions (208a-b) of a heads-up display (104, 200) using a plurality of temperature sensors (106a-b, 206a-h), wherein the plurality of temperature sensors corresponds to the plurality of regions of the heads-up display;
detecting when the temperatures of the plurality of regions lie outside a predefined operating temperature range of the heads-up display; and
when it is detected that the temperatures of the plurality of regions lie outside the predefined operating temperature range,
determining a priority order according to which the temperatures of the plurality of regions are to be controlled, based on at least one of: the temperatures of the plurality of regions, an importance level that is pre-assigned to given virtual content (214a-b) that is to be presented via a given region of the heads-up display; and
controlling the temperatures of the plurality of regions according to the priority order, by using a temperature controlling unit (108, 210) to bring the temperatures of the plurality of regions within the predefined operating temperature range.

12. The method of claim 11, further comprising:
detecting when a user (114) intends to operate the vehicle (102); and
when it is detected that the user intends to operate the vehicle, triggering the steps of determining the temperatures, detecting when the temperatures lie outside the predefined operating temperature range, determining the priority order, and controlling the temperatures.

13. The method of any of claims 11-12, further comprising:
whilst the temperatures of the plurality of regions (208a-b) are being controlled according to the priority order,
detecting when a temperature of a first region of the heads-up display (104, 200) via which virtual content (214a-b), whose importance level is higher than a predefined threshold level, is to be presented lies outside the predefined operating temperature range, but a temperature of a second region of the heads-up display lies within the predefined operating temperature range; and
when it is detected that the temperature of the first region lies outside the predefined operating temperature range, but the temperature of the second region lies within the predefined operating temperature range, presenting the virtual content via the second region of the heads-up display, instead of the first region.

14. The method of any of claims 11-13, further comprising determining the priority order based on the temperatures of the plurality of regions (208a-b), by identifying a subset of the plurality of regions whose respective temperatures lie closer to the predefined operating temperature range than a remainder of the plurality of regions, and by prioritising the subset over the remainder at least partially.

15. The method of claim 14, further comprising:
whilst the temperatures of the plurality of regions (208a-b) are being controlled according to the priority order,
detecting when a region of the heads-up display (104, 200) via which virtual content (214a-b), whose importance level is higher than a predefined threshold level, is to be presented belongs to the remainder of the plurality of regions; and
when it is detected that said region belongs to the remainder, presenting the virtual content via another region belonging to the subset of plurality of regions, instead of said region.
